# EUROPEAN PATENT SPECIFICATION

(11) **EP 3 107 422 B1**
(45) Date of publication and mention of the grant of the patent: **24.01.2018**
(21) Application number: 15710863.0
(22) Date of filing: 13.02.2015
(51) Int. Cl.: B60N 2/68, B60N 2/70, A47C 7/28

(54) **SEAT FOR VEHICLES AND MANUFACTURING METHOD THEREOF**
SITZ FÜR FAHRZEUGE UND HERSTELLUNGSVERFAHREN DAFÜR
SIÈGE POUR VÉHICULES ET SON PROCÉDÉ DE FABRICATION

(30) Priority: 19.02.2014 IT AN20140032
(43) Date of publication of application: 28.12.2016
(73) Proprietor: Lazzerini S.r.l., 60030 Monsano (AN) (IT)
(72) Inventor: CARBONE, Innocenzo Salvatore, 60030 Monsano (AN) (IT); GIRINI, Giulia, 60030 Monsano (AN) (IT)
(74) Representative: Premru, Rok
(86) International application number: PCT/IB2015/000163
(87) International publication number: WO 2015/124987

(56) References cited:
- GB-A- 398 679
- GB-A- 614 775
- US-A- 3 677 601
- US-A- 5 787 562
- US-A1- 2009 224 594
- US-A1- 2013 062 924
- US-B1- 6 604 792

## Description

The object of the present invention is a seat for vehicles used for the transport of passengers, such as buses, minibuses, school buses, trains, subway trains, boats, airplanes, motor vehicles, special means or the like (hereinafter referred to, without distinction, for simplicity of description, as "vehicles").

More in particular the object of the present invention is a seat for vehicles having a simplified structure, minimum overall dimensions and low weight, while able to ensure the same functionality, convenience and comfort of the seats currently installed.

The invention therefore falls within the transport sector, more precisely, in the field of production and supply of components to be installed in vehicles for passengers mobility.

It is known that for the setup of vehicles, preferably for public transport (such as buses, school buses, trains, ships, airplanes and the like), different types of seats to be installed exist each of which suitably designed to withstand the weight (extremely variable) of the passenger that sits in it and/or the stresses to which they are inevitably subjected, for example during the acceleration or braking step of the vehicle and/or in case of accident and/or due the uneven surface whereon it moves.

Said seats may be mounted on pedestals constrainable to the floor surface of the vehicle or, alternatively, installable projecting on at least an inner side thereof or on suitable of the vehicle or, alternatively, installable projecting on at least one inner side or on special inner frames.

The choice of the seat to be installed is usually made based on the type of vehicle to which it is intended.

For this reason, for vehicles which are normally used by a high number of passengers and for short journeys seats with particularly simple structures and not cumbersome are generally used, so as to maximize the number of seats installable per vehicle, normally having a fixed setup (i.e. with inclinations of the backrests and/or of the seats not adaptable to the specific needs of the user).

The backrests and/or the seats of such seats may be without paddings and upholstery consisting of simple rigid panellings, preferably of plastic material (sufficiently resistant to wear and tampering), suitably constrained or printed to their supporting frame.

The simplicity and inexpensiveness of the seat installed is in these cases preferred, at the expense, however, of the comfort and ergonomics thereof.

On the contrary, in vehicles intended to carry people for longer times and journeys, in which, therefore, a greater level of comfort is required, seats are normally installed with sturdier and more stable structures, more comfortable thanks to seats and backrests of increased surface dimensions, sometimes adjustable according to the specific needs of the user (e.g., in height, depth, inclination of the backrest).

In order to ensure maximum comfort and ergonomics, their seats and/or backrests are usually padded or lined with quality materials.

As known, the padding is made of polymeric foam material, for example polyurethane, which is applied on supporting shells of plastic or metal material adapted to ensure rigidity to the seat and/or backrest and a stable support for the rump and the back of the passenger.

The padding is normally co-moulded with said stiffening shells or, alternatively, constrained thereto by gluing or any other known and equivalent technique. Case for covering the structural parts of the supporting frame of the seat otherwise intended to remain in sight, allow the achievement of excellent designs and pleasant aesthetic finishes.

It is clear that the production of these seats may require rather long and complex construction and assembly processes.

The high standards to be guaranteed in terms of comfort and convenience, the high aesthetic value to be achieved as well as the use of the highest quality materials may adversely affect the realization and selling costs that are, in fact, normally higher than those of the "lower range" seats; even their overall dimensions inside the vehicle are higher at least for the provision, as anticipated, of seats and/backrests of increased surface dimensions.

The weight, not negligible, of said seats may adversely affect fuel consumption of the vehicle wherein they are installed.

Document GB614775 A describes a seat for a means of transport to be fastened on the sub-floor of the vehicle. The structure includes a rigid frame comprising two arms, substantially parallel to each other and two cross members at its front and rear ends that hold a sheet. Said sheet is stretched longitudinally by a third intermediate cross member the fixing into position whereof involves a temporary elastic deformation of the structure. The sheet, which is thus tensioned in longitudinal direction and supported only at its ends, may be too yielding for heavy passengers and in addition, the three cross members, the third in particular, may make the seat uncomfortable as it may press against the body of the passenger.

Document US6604792 B1 describes an airplane seat where the seat is made from a sheet which at the front and rear ends has loops wherein two metal bars attached to cavities are inserted; the front cavity is connected to a manually operated linkage that makes it advance "snap-wise" bringing the sheet from a loose state directly to a stretched state and without the need of equipment. The frame, absolutely rigid, does not cooperate in the tensioning of the sheet. Given the comfort that an airplane seat must ensure, the sheet does not act directly as a seat but supports a cushion. Again for comfort reasons, the sheet cannot act both as a seat and backrest as in the document discussed above.

Document US5787562 A has purposes, means and limits very similar to the previous one. The goal is still tensioning, in an easily reversible way, a sheet that acts as a support to a seat cushion.

Document US2013/0062924 A1 describes means for fixing the edges of a sheet to be tensioned suitable also for a sheet that acts as a seat or backrest.

Document US2009/0224594 A1 relates to an airplane seat and describes a seat that provides an extensible sheet shaped as a sleeve that inserts, by stretching it, on a rigid frame. Rigid vertical ribs make the upper and lower surfaces of the sleeve-shaped sheet cooperating in the body support making the seat comfortable. Undoubtedly, the seat known from this disclosure provides comfort but might be expensive for many applications in buses or the like.

Contrary to the previous cited document, GB398679 A (corresponding to the preamble of claim 1) discloses, inter alia, a sort of picnic back support, without legs, where two rear and front rigid cross members strengthen or are the only joining element of a frame. The object of this document is not to offer a seat (of which it is devoid), but to be able to rest the back while sitting directly on the ground. The front cross member serves to rest the back of the thighs and to avoid that, resting the back against the backrest, this tips over.

A variant provides a slack waterproof sheet which has no support function of the body, but only of the rump from the soil moisture.

The object of the present invention is to eliminate the drawbacks of the prior art listed above, by designing a seat for vehicles, preferably for the public and/or private transport of persons, with simplified structure and which may be inexpensively constructed.

More in particular, the object of the present invention is to provide a seat for vehicles with small overall dimensions and such as to provide an overall lightening of the vehicle while always guaranteeing high aesthetic, comfort and convenience standards for the passenger.

Another object of the present invention is to provide a simplified method of making a seat for vehicles.

These and other objects are achieved by the invention, with the features listed in the annexed independent product claim 1 or method claim 14. Further features of the present invention are also disclosed in the dependent claims and shall be better highlighted by the following description of a preferred embodiment, in accordance with the patent claims and illustrated in the enclosed designs. Such figures should be considered as having an illustrative and non-limiting purpose, in which:
- Fig. 1 shows a schematic axonometric view of a vehicle seat according to the invention, exploded in its main components;
- Figures 2a, 2b, 2c and 2d show, schematically and in succession, the assembly steps of the various components making up the seat of Fig. 1;
- Fig. 3 shows a detail of Fig. 2a according to section A-A;
- Fig. 4 shows a view of a variant of the vehicle seat and a detail thereof according to section A-A.

The features of the invention shall now be described, using the references contained in the annexed figures. It should be noted that any dimensional and spatial term (such as "lower", "upper", "right", "left" and the like) refers, unless otherwise indicated, to the position according to which the object of the invention is shown in the drawings.

With the purpose of highlighting some features instead of others, not necessarily what described in the annexed drawings is perfectly scaled.

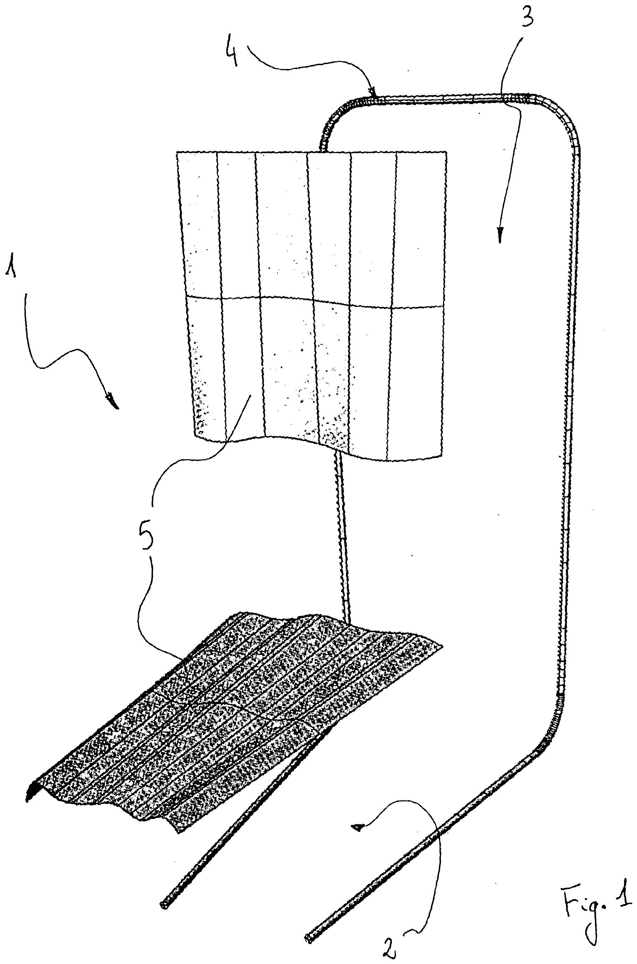

As clearly shown in Fig. 1, reference numeral 1 indicates, as a whole, a vehicle seat comprising a seat 2 and the relevant backrest 3.

More in particular, of said seat 1 there is shown the support structure 4 of said seat 2 and/or backrest 3 and the relative sheets 5 which help to define, as it shall be seen, the support surface for the rump and the back of a user.

The support structure 4 may consist of a single frame suitably shaped to define said seat 2 and backrest 3 (Fig. 1) although it is not forbidden to provide dedicated, separate structures, for said seat 2 and backrest 3, that may be assembled together in a known manner (e.g., by welding).

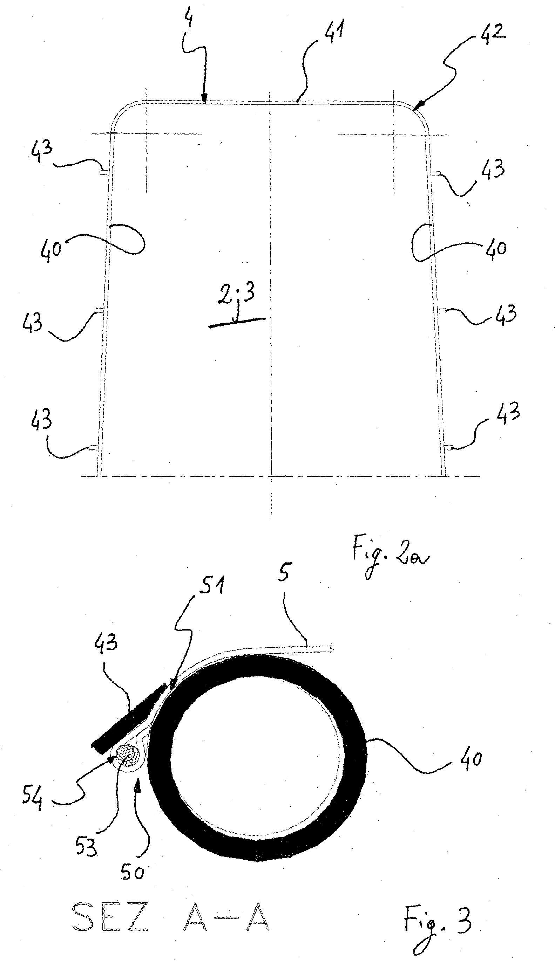

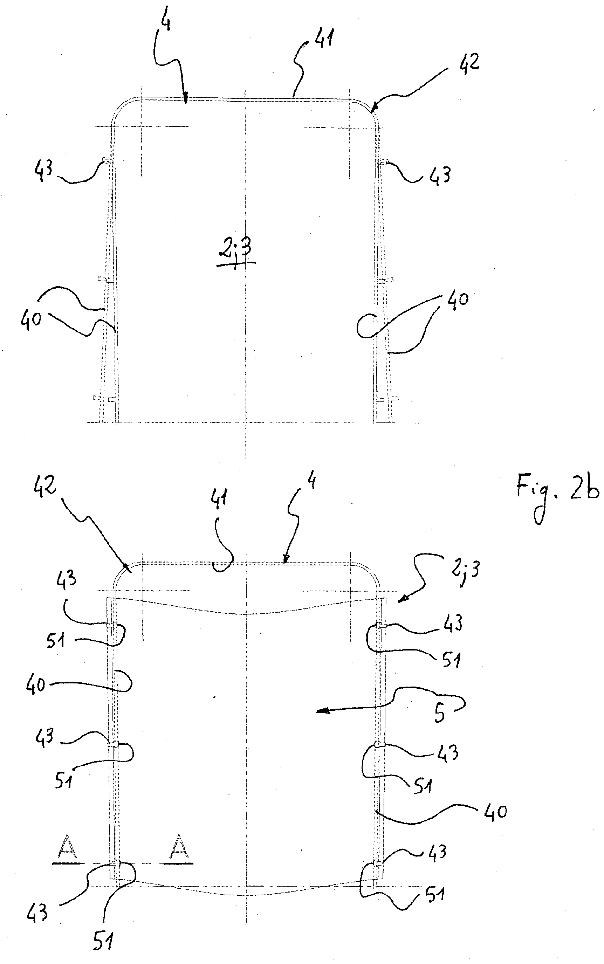

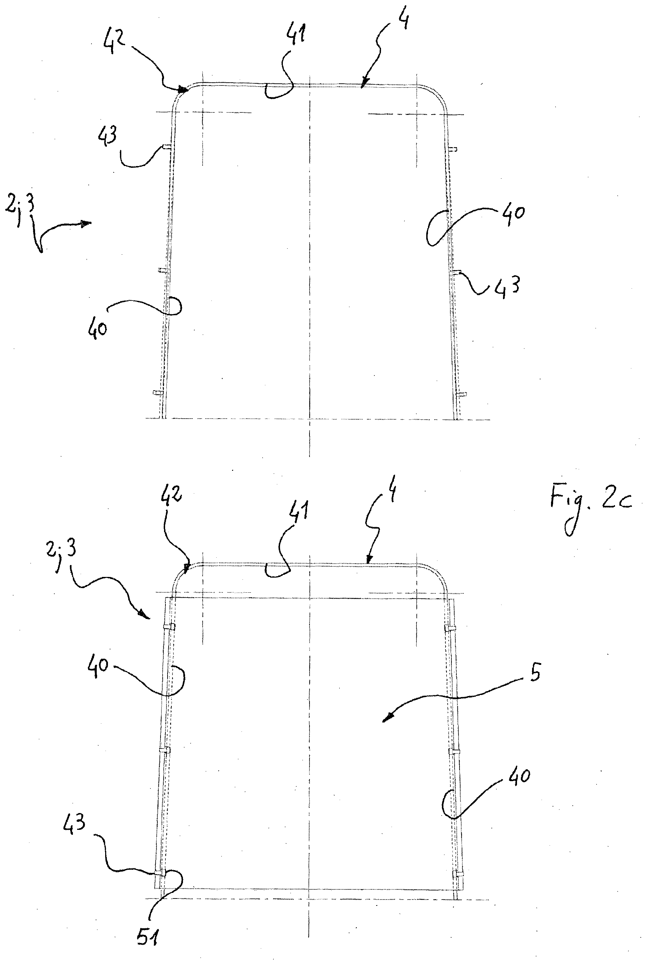

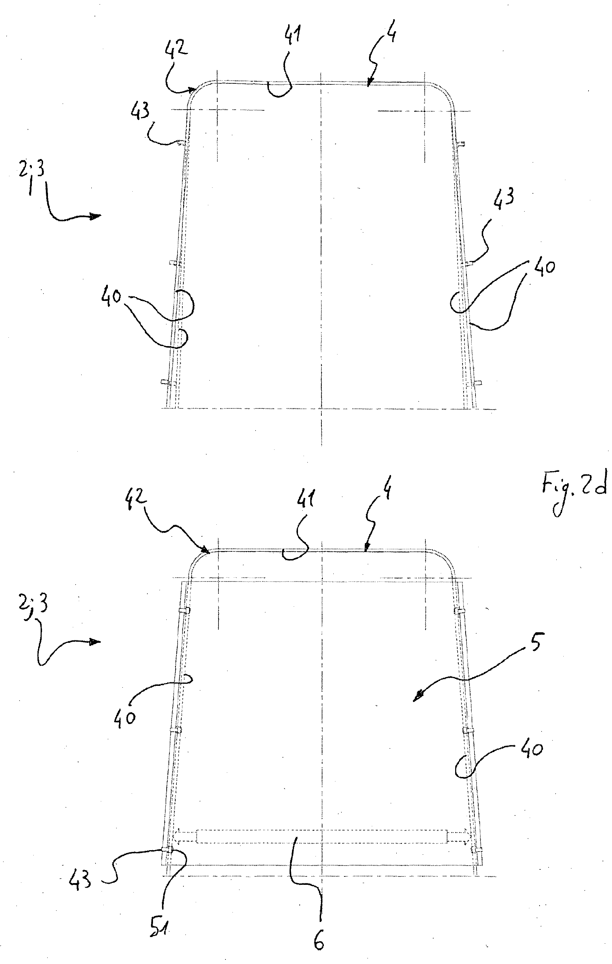

All that will be said with reference to the following Figures 2 to 4, is to be considered valid without distinction both for the seat 2 and the backrest 3 of the seat 1 of the invention.

In Fig. 2a, it is therefore shown a seat 2 and/or backrest 3 of a seat 1 the support structure 4 whereof comprises two metal arms 40, substantially parallel to each other, between which the sheet 5 is capable of being tensioned.

More precisely, said sheet 5, consisting of a known flexible sheet made of polymeric plastic material, of small thickness (for "small thickness" it is meant a thickness in the range of a mm) and characterised by a high resistance to stretching deformations and to tearing; it is provided, at least in the proximity of its side edges 50, with first attachment means 51 which allow the attachment thereof to said arms 40.

For this purpose, the arms 40 are provided with second attachment means 43 suitably made to couple with those 51 of the sheet 5.

According to the invention, said arms 40 are elastically connected to each other through elastic constraints 41.

As clearly shown in Figs. 2a to 2d, said elastic constraints 41 may comprise a cross connecting element 42 which, together with said arms 40, forms a U-shaped support structure 4.

Preferably said cross connecting element 42 is the only elastic constraint 41. The presence of said elastic constraints 41, a peculiar aspect of the invention, facilitates and improves the assembly and the tensioning of the sheet 5 on the respective support structure 4 of the seat 2 and/or backrest 3 of the seat 1.

In fact, said elastic constraints 41 allow:
- a first "rest position" (Fig 2a) for said support structure 4 in which said constrains 21 are tension-free;
- a second "attachment position" (Fig. 2b) that is reachable starting from said first "rest position" (shown in dashed line) forcing said arms 40 to a mutual approach thereof that is sufficient to allow the easy coupling of the first attachment means 51 of the sheet 5 to the second attachment means 43 of said arms 40;
- a third position, called ""pretension" (Fig. 2c), intermediate between said first two positions, which is reachable by releasing the arms 40 and at which the distance of the side edges 50 of the sheet 5 is such as to pretension it, allowing it to support the weight of a user substantially without risks of tearing and/or breakage.

By the effect of this pretension, the sheet 5, constituting the seat 2 and/or the backrest 3, can already provide a "supporting" function, by making the seat 1 substantially operational provided that the force exerted by the weight of the passenger does not cause the failure of the elastic constraints 41.

Therefore it is advantageous, as well as preferable, to further stretch the sheet 5 for greater safety and convenience of the user.

For this reason, the arms 40 are further moved away relative to one another in order to move from said "pretension position" (dashed line of Fig. 2d) to a fourth "tension" position, at which a tension is applied to the sheet 5 which can be chosen up to the maximum operating tension (i.e. the tension at which the sheet 5 may be subjected, under operating conditions, without the risk of breakage or yielding).

According to the invention, this tension is reached through a spacing means 6 which acts, spreading them apart, on the arms 40 of the metal support structure 4 of the seat and/or backrest 3 of the seat 1.

Once that "tension position " is reached, according to known techniques and methods within reach of the man skilled in the art, the seat 1 is then ready for installation on its support.

Having described the seat 1 of the invention in its most generic possible form, at this point, let's now describe, without any limiting intent, some preferred embodiments. The above spacing means 6 for the final tensioning of the sheet 5 of the seat 2 and/or the backrest 3 of the seat 1 may consist of, for example, a strut 6 insertable between the arms 40 of the support structure 4.

According to an alternative variant (not shown in the attached figures), said spacing means 6 may consist of at least one cross member 6 of the support structure 4 of the seat 2 and/or the backrest 3 the ends whereof comprise brackets capable of being constrained externally to the corresponding arms 40 by means of screws, the tightening whereof results in a spreading-apart and mutual spacing thereof.

Even for the attachment means 43, 51 of the sheet 5 to the support structure 4 of the seat 2 and/or backrest 3 of the seat 1 several constructive variants may be provided.

For example, according to a preferred embodiment of the invention (see Fig. 3), the attachment means 43 of the support structure 4 of the seat and/or backrest 3 may consist of a plurality of hooks 43 constrained (e.g., by welding) to the relative arms 40 while the attachment means 51 of the sheet 5 may consist of an equal number of slots 51, formed in the proximity of its edges 50, adapted to receive and allow the passage of said hooks 43, achieving in fact the coupling between sheet 5 - support structure 4.

A cable 53, inserted in a loop 54 formed at least at the side edges 50 of the sheet 5 and placed in abutment against the inner face of each hook 43, acts as a locking and strengthening element of the attachment achieved (avoiding, for example, accidental disengagements of the hook 43 from the respective slot 51 and/or tearing of the same).

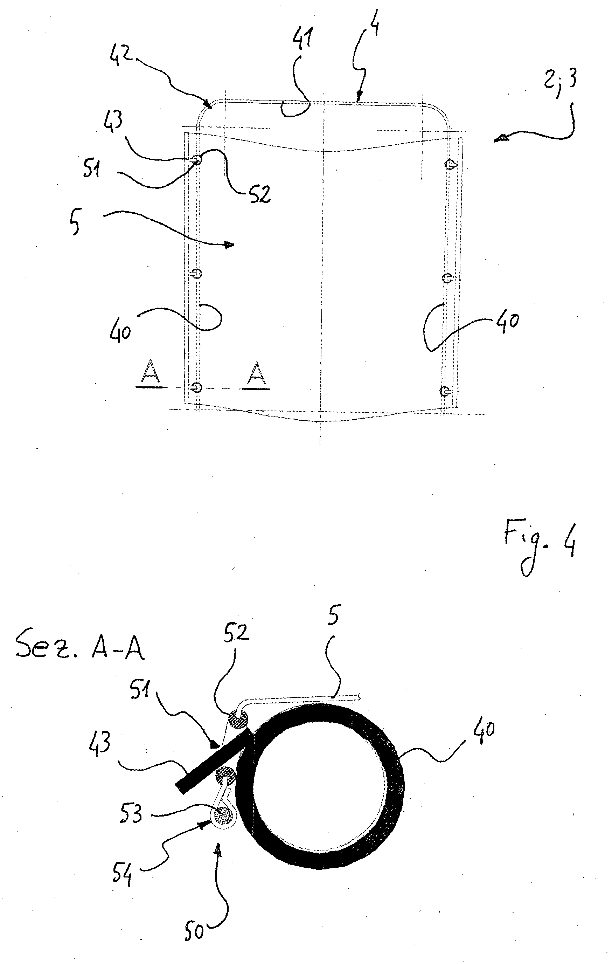

Said slots 51 may consist of simple "tears" of the sheet 5, optionally strengthened by eyelets 52 (see. Fig. 4). A dual embodiment may obviously be provided, according to which the hooks are integrated to the sheet 5 and the holes for their attachment are formed along the arms 40 of the support structure 4 of the seat 1.

Moreover, nothing prevents simplified systems for attaching the sheet 5 to the arms 40 of the support structure 4 of the seat 1; for example, the sheet 5 may be provided, at the side edges 50 thereof, with loops sized to receive and insert therein the above arms 40.

As an alternative, the side edges 50 of the sheet 5 may be forced and locked (e.g., by interference) inside grooves formed along the arms 40 of the support structure 4.

According to a further possible embodiment, said sheet 5 may be shaped as a kind of "sleeve" (or tubular element) capable of being inserted about the support structure 4 of the seat 1 to form the seat 2 and/or the relevant backrest 3.

For purely aesthetic reasons and in order to impart the maximum comfort, the seat 1, described above, can be provided with a padding (e.g., made of polyurethane foam), covered with synthetic or quality material, and connectable, by know means (for example through Velcro and/or buttons), to the support structure 4 thereof.

Unlike the prior art, said padding must not provide rigid shells whereon it is co-moulded or applied; in fact, it is now the tensioned sheet 5 to perform those functions of stiffening and stabilisation of the padding, necessary in order to easily and safely support the weight of the user. Therefore, the aesthetic and/or structural and/or comfort result may be identical to that of the seats currently known and installed.

Similarly to the prior art, cases of plastic or similar material may be used to conceal those parts of the support structure 4 of the seat 1 otherwise intended to remain in sight (e.g., the rear face of the backrest 3 or the lower one of the seat 2), with negative consequences on the overall aesthetics of the product.

Moreover, nothing prevents the seat 1 of the invention from incorporating known accessories such as armrests, headrests, restraint systems, etc., or providing seats 2 and/or backrests 3 adjustable in height, depth or reclinable.

Finally, the method of making the seat 1 of the invention is summarized, in particular the procedure for the tensioning of the sheet 5 defining the seat 2 and/or backrest 3 thereof. As already emerged during the present description, it provides at least the following steps:
- approaching the said arms 40, substantially parallel to each other, of the support structure 4 of the seat 2 and/or of the backrest in a way sufficient to allow the coupling of the first attachment means 51 of the sheet 5 to the second attachment means 43 of said arms 40, said support structure 4 moving from a "rest position" (Fig. 2a) to an "attachment position" (Fig. 2b)
- releasing the arms 40 so as to allow their mutual spacing and the achievement of a "pretension position" (Fig. 2c), intermediate between said "attachment position" and "rest position", in said "pretension position" the distance between the side edges 50 of the sheet 5 being sufficient to impart a tension to the sheet 5, which may be already be suitable to support the weight of a passenger
- completing the tensioning of the sheet 5 by further and reciprocally spacing said arms 40 until reaching a "tension position" (Fig. 2d), at which the tension of the sheet 5 can reach its maximum operating tension.

In conclusion, it has been thus seen that with the seat 1 of the invention described above the previously noted objects have been achieved, in particular the possibility of making a seat 1 for vehicles, preferably for the public and/or private transport of persons, with simplified structure.

While preserving the normal features and technical-functional properties, namely, it is possible to make a seat of low cost and advantageously installable on any type of vehicles for the transport of persons (e.g., in vehicles used for both short and long journeys, which, as known, differ for the degree of comfort required).

The structural simplification of the seats 1 and the elimination of some components provided in the current ones (for example, the rigid shells for moulding/gluing the polyurethane foam padding) lead to a significant reduction of their overall dimensions and, above all, an overall lightening of the vehicle with positive effects, e.g., on fuel consumption.

## Claims

1. Seat (1) for vehicles for the transport of passengers comprising a seat (2) and a backrest (3), said seat (2) and/or backrest (3) comprising a support structure (4), comprising at least two metal arms (40) substantially parallel to each other, and a sheet (5) capable of being stretched between said arms (40),
- said sheet (5) being provided, at least at the side edges (50) thereof, with first attachment means (51) which allow the attachment thereof to said arms (40)
- said arms (40) being in turn provided with second attachment means (43) constrainable to said first attachment means (51, 53) of said sheet (5) and being elastically connected to each other through elastic constraints (41), whereby said elastic constraints (41) enable said arms (40) to take:
- a first "rest position" for said support structure (4) in which they are tension-free; and
- a second "attachment position" which is reachable starting from said first "rest position" by forcing said arms (40) to a mutual approach thereof sufficient to allow the attachment of said first (51) and second (43) attachment means;
**characterised in that** said elastic constraints (41) comprise a cross member (42) of said support structure (4), said cross member (42) being joined to said arms (40) to form a U-shaped support structure (4), and **in that** said elastic constraints further enable said arms (40) to take:
- a third "pretension position", intermediate between said attachment and rest positions, which is reachable by releasing said arms (40) and at which the distance of the side edges (50) of said sheet (5) is such as to pretension it; and
- a fourth "tension position" at which a tension can be applied to said sheet (5) up to the maximum operating tension thereof, said "tension position" being reachable starting from said "pretension position" via a spacing means (6) capable of spreading apart, moving them away relative to one another, said arms (40) of said support structure (4) of said seat (2) and/or backrest (3).

2. Seat (1) according to claim 1, **characterised in that**
said cross member (42) is the only elastic constraint (41).

3. Seat (1) according to claim 1 or 2, **characterised in that**
- said attachment means (43) of said arms (40) comprise a plurality of hooks (43) restrained thereto
- said attachment means (51, 53) of said sheet (5) comprise an equal number of slots (51) formed in the proximity of the side edges (50) thereof, said slots (51) allowing the passage and the attachment with said hooks (43).

4. Seat (1) according to claim 3, **characterised in that**
said slots (51) consist of tears formed on said sheet (5).

5. Seat (1) according to claim 4, **characterised in that**
said tears (51) can be strengthened by eyelets (52).

6. Seat (1) according to any of the previous claims, **characterised in that**
said attachment means (51, 53) further comprises a cable (53), inserted in a loop (54) formed in the proximity of said side edges (50) of said sheet (5), said cable (53) being capable of being placed in abutment against the inner face of each hook (43) and acting as a locking and strengthening element of the attachment achieved.

7. Seat (1) according to claim 1 or 2, **characterised in that**
- said attachment means (51, 53) of said sheet (5) consist of a plurality of hooks
- said attachment means (43) of said arms (40) consist of a plurality of hooking holes for said hooks of said sheet (5).

8. Seat (1) according to claim 1 or 2, **characterised in that**
said sheet (5) is provided at the side edges (50) thereof with loops adapted to receive and insert therein said arms (40) of said support structure (4) of said seat (2) and/or backrest (3).

9. Seat (1) according to claim 1 or 2, **characterised in that**
said side edges (50) of said sheet (2) are forced and locked within grooves formed along said arms (40) of said support structure (4) of said seat (2) and/or backrest (3).

10. Seat (1) according to claim 1 or 2, **characterised in that**
said sheet (5) is shaped as a kind of sleeve capable of being inserted about said support structure (4) of said seat (2) and/or backrest (3).

11. Seat (1) according to claim 1,
**characterised in that**
said spacing means (6) consists of a strut (6) inserted between said arms (40) of said support structure (4) of said seat (2) and/or backrest (3).

12. Seat (1) according to claim 1, **characterised in that**
said spacing means (6) consists in a cross member (6) of said support structure (4) of said seat (2) and/or backrest (3), the ends of said cross member (6) comprising brackets capable of being placed externally to said arms (40) by means of screws, the tightening of said screws resulting in a spreading-apart thereof and mutual spacing.

13. Seat (1) according to any previous claim,
**characterised in that**
said seat (2) and/or backrest (3) comprise an external padding, said padding consisting exclusively of a layer of polymeric foam material.

14. Method of making a seat (2) and/or a backrest (3) of a seat (1) for vehicles for the transport of passengers according to any of claims 1 to 13,
wherein said sheet (5) for supporting a passenger is tensioned by mutually spacing said arms (40) to which said sheet is constrained the method comprising the following steps:
- approaching the said arms (40), constrained by said elastic constraints (41) substantially parallel to one another, of the support structure (4) of said seat (2) and/or backrest (3) in a way sufficient to allow the coupling of the first attachment means (51) of the sheet (5) to the second attachment means (43) of said arms (40), said support structure (4) moving from a "rest position" to an "attachment position"
- releasing said arms (40) so as to allow the mutual spacing thereof and the achievement of a "pretension position", intermediate between said "attachment position" and "rest position", at which the distance between the side edges (50) of said sheet (5) is such as to pretension it
- completing the tensioning of said sheet (5) further and mutually distancing said arms (40) of said support structure (4) of said seat (2) and/or backrest (3) up to achieving a "tension position" at which said sheet (5) can reach a tension up to the maximum operating tension.

## Patentansprüche

1. Sitz (1) für Fahrzeuge für den Personentransport, umfassend eine Sitzfläche (2) und eine Rückenlehne (3), wobei die Sitzfläche (2) und/oder die Rückenlehne (3) eine Tragstruktur (4) aufweist/aufweisen, die mindestens zwei Metallarme (40), die im Wesentlichen parallel zueinander sind, und eine Folie (5) aufweist, die geeignet ist, zwischen den Armen (40) gespannt zu werden,
- wobei die Folie (5) mindestens an den Seitenrändern (50) davon mit ersten Befestigungsmitteln (51) versehen ist, die das Befestigen davon an den Armen (40) ermöglichen,
- wobei die Arme (40) wiederum mit zweiten Befestigungsmitteln (43) versehen sind, die an den ersten Befestigungsmitteln (51, 53) der Folie (5) befestigt werden können, und durch elastische Befestigungen (41) elastisch miteinander verbunden sind,
wobei die elastischen Befestigungen (41) den Armen (40) ermöglichen:
- eine erste "Ruheposition" für die Tragstruktur (4) einzunehmen, in der sie spannungsfrei sind, und
- eine zweite "Befestigungsposition" einzunehmen, die ausgehend von der ersten "Ruheposition" erreichbar ist, indem die Arme (40) zu einer gegenseitigen Annäherung davon forciert werden, die ausreichend ist, um das Befestigen der ersten (51) und zweiten (43) Befestigungsmittel zu ermöglichen,
**dadurch gekennzeichnet, dass** die elastischen Befestigungen (41) ein Querelement (42) der Tragstruktur (4) aufweisen, wobei das Querelement (42) mit den Armen (40) verbunden ist, um eine U-förmige Tragstruktur (4) zu bilden, und dadurch, dass die elastischen Befestigungen ferner den Armen (40) ermöglichen:
- eine dritte "Vorspannposition" einzunehmen, die zwischen der Befestigungsposition und der Ruheposition liegt, die durch Loslassen der Arme (40) erreichbar ist und bei der der Abstand der Seitenränder (50) der Folie (5) derart ist, dass sie vorgespannt ist, und
- eine vierte "Spannposition" einzunehmen, bei der die Folie (5) bis zu der maximalen Betriebszugspannung davon gespannt werden kann, wobei die "Spannposition" ausgehend von der "Vorspannposition" über ein Abstandsmittel (6) erreichbar ist, das geeignet ist, die Arme (40) der Tragstruktur (4) der Sitzfläche (2) und/oder der Rückenlehne (3) auseinander zu spreizen, indem sie relativ voneinander wegbewegt werden.

2. Sitz (1) nach Anspruch 1,
**dadurch gekennzeichnet, dass**
das Querelement (42) die einzige Befestigung (41) ist.

3. Sitz (1) nach Anspruch 1 oder 2,
**dadurch gekennzeichnet, dass**
- die Befestigungsmittel (43) der Arme (40) mehrere Haken (43) aufweisen, die daran befestigt sind,
- die Befestigungsmittel (51, 53) der Folie (5) eine gleiche Anzahl von Schlitzen (51) aufweisen, die in der Nähe der Seitenränder (50) davon gebildet sind, wobei die Schlitze (51) den Durchgang und das Befestigen mit den Haken (43) ermöglichen.

4. Sitz (1) nach Anspruch 3,
**dadurch gekennzeichnet, dass**
die Schlitze (51) aus Rissen bestehen, die an der Folie (5) gebildet sind.

5. Sitz (1) nach Anspruch 4,
**dadurch gekennzeichnet, dass**
die Schlitze (51) durch Ösen (52) verstärkt werden können.

6. Sitz (1) nach einem der vorhergehenden Ansprüche,
**dadurch gekennzeichnet, dass**
die Befestigungsmittel (51, 53) ferner ein Seil (53) aufweisen, das in eine Schlaufe (54) eingefügt ist, die in der Nähe der Seitenränder (50) der Folie (5) gebildet ist, wobei das Seil (53) geeignet ist, in Anschlag gegen die Innenseite von jedem Haken (43) angeordnet zu werden und als Verschluss- und Verstärkungselement der erzielten Befestigung dient.

7. Sitz (1) nach Anspruch 1 oder 2,
**dadurch gekennzeichnet, dass**
- die Befestigungsmittel (51, 53) der Folie (5) aus mehreren Haken bestehen,
- die Befestigungsmittel (43) der Arme (40) aus mehreren Hakenlöchern für die Haken der Folie (5) bestehen.

8. Sitz (1) nach Anspruch 1 oder 2,
**dadurch gekennzeichnet, dass**
die Folie (5) an den Seitenrändern (50) davon mit Schlaufen versehen ist, die geeignet sind, die Arme (40) der Tragstruktur (4) der Sitzfläche (2) und/oder der Rückenlehne (3) aufzunehmen und darin hinzufügen.

9. Sitz (1) nach Anspruch 1 oder 2,
**dadurch gekennzeichnet, dass**
die Seitenränder (50) der Folie (2) in Nuten hineingezwängt und darin festgesteckt sind, die entlang der Arme (40) der Tragstruktur der (4) Sitzfläche (2) und/oder der Rückenlehne (3) ausgebildet sind.

10. Sitz (1) nach Anspruch 1 oder 2,
**dadurch gekennzeichnet, dass**
die Folie (5) als eine Art Hülse ausgeformt ist, die geeignet ist, um die Tragstruktur der (4) Sitzfläche (2) und/oder der Rückenlehne (3) herum gesteckt zu werden.

11. Sitz (1) nach Anspruch 1,
**dadurch gekennzeichnet, dass**
das Abstandsmittel (6) aus einer Strebe (6) besteht, die zwischen den Armen (40) der Tragstruktur (4) der Sitzfläche (2) und/oder der Rückenlehne (3) eingefügt ist.

12. Sitz (1) nach Anspruch 1,
**dadurch gekennzeichnet, dass**
das Abstandsmittel (6) aus einem Querelement (6) der Tragstruktur (4) der Sitzfläche (2) und/oder der Rückenlehne (3) besteht, wobei die Enden des Querelements (6) Klammern aufweisen, die geeignet sind, außerhalb von den Armen (40) mittels Schrauben angeordnet zu werden, wobei das Festziehen der Schrauben zu einem Auseinanderspreizen davon und einem gegenseitigen Beabstanden führt.

13. Sitz (1) nach einem der vorhergehenden Ansprüche,
**dadurch gekennzeichnet, dass**
die Sitzfläche (2) und/oder die Rückenlehne (3) eine äußere Polsterung aufweisen, wobei die Polsterung ausschließlich aus einer Schicht aus Polymer-Schaumstoff besteht.

14. Verfahren zur Herstellung einer Sitzfläche (2) und/oder einer Rückenlehne (3) eines Sitzes (1) für Fahrzeuge für den Personentransport nach einem der Ansprüche 1 bis 13,
wobei die Folie (5) zum Tragen eines Passagiers durch gegenseitiges Beabstanden der Arme (40), auf denen die Folie befestigt ist, gespannt wird,
wobei das Verfahren die folgenden Schritte aufweist:
- Annähern der Arme (40) der Tragstruktur (4) der Sitzfläche (2) und/oder der Rückenlehne (3), die durch die elastischen Befestigungen (41) im Wesentlichen parallel zueinander befestigt sind, in einer Weise, die ausreichend ist, um das Verbinden des ersten Befestigungsmittels (51) der Folie (5) mit dem zweiten Befestigungsmittel (43) der Arme (40) zu ermöglichen, wobei sich die Tragstruktur (4) von einer "Ruheposition" in eine "Befestigungsposition" bewegt,
- Loslassen der Arme (40), um gegenseitiges Beabstanden davon und das Erreichen einer "Vorspannungsposition" zu ermöglichen, die zwischen der "Befestigungsposition" und der "Ruheposition" liegt, bei der der Abstand zwischen den Seitenrändern (50) der Folie (5) derart ist, dass sie vorgespannt wird,
- weiteres Vervollständigen des Spannens der Folie (5) und gegenseitiges Beabstanden der Arme (40) der Tragstruktur (4) der Sitzfläche (2) und/oder der Rückenlehne (3) bis zum Erreichen einer "Spannposition", bei der die Folie (5) bis zu der maximalen Betriebszugspannung davon gespannt werden kann.

## Revendications

1. Siège (1) pour véhicules de transport de passagers comprenant un siège (2) et un dossier (3), ledit siège (2) et/ou dossier (3) comprenant une structure de support (4), comprenant au moins deux des bras métalliques (40) sensiblement parallèles entre eux, et une feuille (5) susceptible d'être étirée entre lesdits bras (40),
- ladite feuille (5) étant munie, au moins au niveau des bords latéraux (50) de celle-ci, de premiers moyens de fixation (51) qui permettent la fixation de celle-ci auxdits bras (40)
- lesdits bras (40) étant à leur tour munis de seconds moyens de fixation (43) contraignables auxdits premiers moyens de fixation (51, 53) de ladite feuille (5) et reliés élastiquement l'un à l'autre par des contraintes élastiques (41),
grâce à quoi lesdites contraintes élastiques (41) permettent auxdits bras (40) de prendre :
- une première « position de repos » pour ladite structure de support (4) dans laquelle ils sont libres de tension ; et
- une deuxième « position de fixation » qui est accessible à partir de ladite première « position de repos » en forçant lesdits bras (40) à une approche mutuelle suffisante pour permettre la fixation desdits premiers (51) et seconds (43) moyens de fixation;
**caractérisé en ce que** lesdites contraintes élastiques (41) comprennent une traverse (42) de ladite structure de support (4), ladite traverse (42) étant jointe auxdits bras (40) pour former une structure de support en forme de U (4), et **en ce que** lesdites contraintes élastiques permettent en outre auxdits bras (40) de prendre :
- une troisième « position de précontrainte », intermédiaire entre lesdites positions de fixation et de repos, qui est accessible en libérant lesdits bras (40) et à laquelle la distance des bords latéraux (50) de ladite feuille (5) est telle qu'elle la précontraint; et
- une quatrième « position de tension » à laquelle une tension peut être appliquée à ladite feuille (5) jusqu'à sa tension maximale de fonctionnement, ladite « position de tension » pouvant être atteinte à partir de ladite « position de précontrainte » par un moyen d'espacement (6) à écarter, à les écarter les uns des autres, lesdits bras (40) de ladite structure de support (4) dudit siège (2) et/ou dossier (3).

2. Siège (1) selon la revendication 1
**caractérisé en ce que**
ladite traverse (42) est la seule contrainte élastique (41).

3. Siège (1) selon la revendication 1 ou 2,
**caractérisé en ce que**
- lesdits moyens de fixation (43) desdits bras (40) comprennent une pluralité de crochets (43) retenus sur ceux-ci
- lesdits moyens de fixation (51, 53) de ladite feuille (5) comprennent un nombre égal de fentes (51) formées à proximité des bords latéraux (50) de celle-ci, lesdites fentes (51) permettant le passage et la fixation avec lesdits crochets (43).

4. Siège (1) selon la revendication 3,
**caractérisé en ce que**
lesdites fentes (51) consistent en des déchirures formées sur ladite feuille (5).

5. Siège (1) selon la revendication 4,
**caractérisé en ce que**
lesdites déchirures (51) peuvent être renforcées par des oeillets (52).

6. Siège (1) selon l'une quelconque des revendications précédentes, **caractérisé en ce que**
lesdits moyens de fixation (51, 53) comprennent en outre un câble (53) inséré dans une boucle (54) formée à proximité desdits bords latéraux (50) de ladite feuille (5), ledit câble (53) pouvant être placé en butée contre la face interne de chaque crochet (43) et agissant comme un élément de verrouillage et de renforcement de la fixation réalisée.

7. Siège (1) selon la revendication 1 ou 2
**caractérisé en ce que**
- lesdits moyens de fixation (51, 53) de ladite feuille (5) sont constitués d'une pluralité de crochets
- lesdits moyens de fixation (43) desdits bras (40) sont constitués d'une pluralité de trous d'accrochage desdits crochets de ladite feuille (5).

8. Siège (1) selon la revendication 1 ou 2
**caractérisé en ce que**
ladite feuille (5) est pourvue sur ses bords latéraux (50) de boucles adaptées pour recevoir et insérer dans celle-ci lesdits bras (40) de ladite structure de support (4) dudit siège (2) et/ou dossier (3).

9. Siège (1) selon la revendication 1 ou 2
**caractérisé en ce que**
lesdits bords latéraux (50) de ladite feuille (2) sont forcés et bloqués dans des rainures formées le long desdits bras (40) de ladite structure de support (4) dudit siège (2) et/ou dossier (3).

10. Siège (1) selon la revendication 1 ou 2
**caractérisé en ce que**
ladite feuille (5) est conformée en une sorte de manchon susceptible d'être inséré autour de ladite structure de support (4) dudit siège (2) et/ou dossier (3).

11. Siège (1) selon la revendication 1,
**caractérisé en ce que**
lesdits moyens d'espacement (6) consistent en une entretoise (6) insérée entre lesdits bras (40) de ladite structure de support (4) dudit siège (2) et/ou dossier (3).

12. Siège (1) selon la revendication 1,
**caractérisé en ce que**
lesdits moyens d'espacement (6) consistent en une traverse (6) de ladite structure de support (4) dudit siège (2) et/ou dossier (3), les extrémités de ladite traverse (6) comprenant des supports pouvant être placés à l'extérieur desdits bras (40) au moyen de vis, le serrage desdites vis entraînant leur écartement et leur espacement mutuel.

13. Siège (1) selon l'une quelconque des revendications précédentes,
**caractérisé en ce que**
ledit siège (2) et/ou dossier (3) comprennent un rembourrage externe, ledit rembourrage consistant exclusivement en une couche de matériau en mousse polymère.

14. Procédé de fabrication d'un siège (2) et/ou d'un dossier (3) d'un siège (1) de véhicules pour le transport de passagers selon l'une quelconque des revendications 1 à 13,
dans lequel ladite feuille (5) pour supporter un passager est tendue en espaçant mutuellement lesdits bras (40) auxquels ladite feuille est contrainte
le procédé comprenant les étapes suivantes :
- approchant lesdits bras (40), contraints par lesdites contraintes élastiques (41) sensiblement parallèles entre elles, de la structure de support (4) dudit siège (2) et/ou dossier (3) d'une manière suffisante pour permettre le couplage des premiers moyens de fixation (51) de la feuille (5) aux seconds moyens de fixation (43) desdits bras (40), ladite structure de support (4) passant d'une « position de repos » à une « position de fixation »
- relâcher lesdits bras (40) de manière à permettre leur écartement mutuel et l'obtention d'une « position de précontrainte » intermédiaire entre ladite « position de fixation » et ladite « position de repos », à laquelle la distance entre les bords latéraux (50) de ladite feuille (5) est de nature à la prétendre
- complétant la mise en tension de ladite feuille (5) et écartant mutuellement lesdits bras (40) de ladite structure de support (4) dudit siège (2) et/ou dossier (3) jusqu'à atteindre une « position de tension » à laquelle ladite la feuille (5) peut atteindre une tension jusqu'à la tension de fonctionnement maximale.
